# EUROPÄISCHE PATENTSCHRIFT

(11) **EP 2 986 353 B1**
(45) Veröffentlichungstag und Bekanntmachung des Hinweises auf die Patenterteilung: **24.05.2017**
(21) Anmeldenummer: 14710202.4
(22) Anmeldetag: 17.02.2014
(51) Int. Cl.: B01D 39/08, D03D 1/00, D03D 11/00, D03D 13/00, D03D 15/00

(54) **BANDFILTER**
BANDFILTER
BANDE DE FILTRATION

(30) Priorität: 15.04.2013 DE 202013003527 U
(43) Veröffentlichungstag der Anmeldung: 24.02.2016
(73) Patentinhaber: Sefar AG, 9140 Heiden (CH)
(72) Erfinder: ERLENMAIER, Isabell, CH-9000 St.Gallen (CH); MAURER, Christoph, CH-8044 Zürich (CH); GURTNER, Christian, CH-9414 Schachen b. Reute (CH); DIETMAYER, Christian, 88131 Lindau (DE)
(74) Vertreter: Wunderlich, Rainer
(86) Internationale Anmeldenummer: PCT/EP2014/053015
(87) Internationale Veröffentlichungsnummer: WO 2014/170046

(56) Entgegenhaltungen:
- EP-A1- 1 129 755
- EP-A1- 2 500 077
- DE-A1- 2 627 283
- DE-B- 1 003 185

## Beschreibung

Die Erfindung betrifft einen Bandfilter mit einem Filtermedium, wobei das Filtermedium mit einem Filtergewebe an einer Oberseite und einem Stützgewebe an einer Unterseite ausgebildet ist.

Dokument EP 2 500 077 A1 offenbart einen Bandfilter mit einem feinen Filtergewebe und einem groben Stützgewebe. Dieses Dokument lehrt das Stützgewebe und das Filtergewebe separat herzustellen und miteinander zu verkleben.

Doppelgewebe (siehe z. B. DE2627283 A1, DE1003185) werden seit langem zur Filtration eingesetzt. Üblicherweise ist bei einem solchen Doppelgewebe das Stützgewebe grobmaschiger gewebt als das darauf angeordnete Filtergewebe. Das Filtergewebe dient zur Fest-Flüssig-Trennung, etwa beim Einsatz auf Filterplatten von Filterpressen oder bei Bandfiltern. Bei derartigen Filtrationseinrichtungen liegt teilweise ein hoher Filtrationsdruck an, aufgrund dessen Flüssigkeit die Poren des Filtergewebes durchdringt, während Feststoffpartikel durch das Filtergewebe zurückgehalten werden.

Das Stützgewebe hat dabei maßgeblich die Aufgabe, die mechanische Stabilität des Filtermediums bei den anliegenden Filtrationsdrücken zu erhöhen. Bei einem Doppelgewebe werden das Filtergewebe und das Stützgewebe miteinander gewoben. Dabei können die Fäden oder Garne des groben Stützgewebes die Struktur eines feineren Filtergewebes beeinflussen. Daher werden solche Doppelgewebe mit Filtergewebe und Stützgewebe maßgeblich dort eingesetzt, wo feine Poren benötigt werden.

Für eine Feinfiltration ist es bekannt, eine Filtermembran oder ein Feingewebe auf ein Stützgewebe aufzukleben. Klebeverbindungen sind im rauen Filtrationsbetrieb jedoch anfällig, wobei auch bestimmte Klebstoffe je nach Filtrationsaufgabe aufgrund ihrer chemischen Beständigkeit nicht frei einsetzbar sind. Zudem führt ein Verkleben häufig zu einem Verschluss von Poren, wodurch sich die Filterleistung des Filtermediums herabsetzt.

Der Erfindung liegt die **Aufgabe** zugrunde, einen Bandfilter mit einem Filtermedium anzugeben, welches einerseits robust ist und andererseits auch für eine Feinfiltration eingesetzt werden kann.

Die Aufgabe wird nach der Erfindung durch einen Bandfilter mit den Merkmalen des Anspruchs 1 gelöst. Bevorzugte Ausführungsformen des erfindungsgemäßen Filtermediums sind in den abhängigen Ansprüchen angegeben.

Gemäß der Erfindung ist der Bandfilter dadurch gekennzeichnet, dass das Filtergewebe eine Porenzahl von 5.000/cm² aufweist.

Nach der Erfindung wird ein Doppelgewebe mit einem extrem feinen Filtergewebe mit zumindest 5.000 Poren/cm² geschaffen. Somit kann das Filtermedium auch zu einer Feinstfiltration eingesetzt werden. Durch ein Ausbilden des Filtergewebes mit dem Stützgewebe als ein Doppelgewebe wird eine hohe Stabilität erreicht, ohne dass hierzu Klebstoffe notwendig wären. Filter und Filtration im Sinne der Erfindung sind allgemein zu verstehen und nicht auf eine kuchenbildende Filtration beschränkt. Vielmehr sind etwa auch eine Siebung oder Klassierung umfasst.

Eine bevorzugte Ausführungsform der Erfindung besteht darin, dass die Dichte der Kettfäden des Filtergewebes zumindest um den Faktor 5, vorzugsweise um den Faktor 10 höher als eine Dichte der Kettfäden des Stützgewebes ist. Es sind somit 2 Kettfadensysteme vorgesehen, wobei das Kettfadensystem des Filtergewebes je Längeneinheit mehr als 5 mal so viele Kettfäden aufweist als das Kettfadensystem des Stützgewebes. Dies erlaubt einerseits eine sehr feine Ausbildung des Filtergewebes und andererseits das Anordnen eines sehr robusten Stützgewebes.

Dabei ist es nach der Erfindung besonders bevorzugt, dass ein Verhältnis des Durchmessers der Kettfäden des Stützgewebes zum Durchmesser der Kettfäden des Filtergewebes ≥3,5 ist. Die Durchmesser der Kettfäden des Filtergewebes sind also mindestens 3,5 mal so groß wie die Durchmesser der Kettfäden des Filtergewebes. Nach der Erfindung sind zumindest 70% der Dicke des Filtermediums durch das Stützgewebe bedingt, während der restliche Anteil der Dicke durch das Feingewebe gebildet ist. Hierdurch wird erreicht, dass der Einfluss des Stützgewebes auf die Filtrationsleistung, also auf einen Durchströmungswiderstand des Filtermediums, gering bleibt. Eine besonders vorteilhafte Ausgestaltung des Filtermediums ergibt sich nach einer weiteren Ausführungsvariante dadurch, dass ein Verhältnis des Durchmessers des Schussfadens des Stützgewebes zum Durchmesser des Schussfadens des Filtergewebes ≥2,5 ist. Damit ist auch der Schussfaden des Stützgewebes erheblich größer als der Schussfaden des Filtergewebes. Grundsätzlich können die Kettfäden und die Schussfäden im Stützgewebe beziehungsweise im Filtergewebe jeweils mit gleichem Durchmesser ausgebildet sein. Vorzugsweise sind jedoch die Kettfäden im jeweiligen Gewebeabschnitt jeweils größer als die Durchmesser der Schussfäden in dem jeweiligen Gewebeabschnitt.

Zur Erreichung einer hohen Porenzahl im Filtergewebe sind nach der Erfindung das Filtergewebe und das Stützgewebe über ein weiteres Fadensystem als Bindeschuss oder Bindekette ververbunden. Auf diese Weise kann verhindert werden, dass sich die durchmessergrößeren Fäden des Stützgewebes in den oberen Bereich des Doppelgewebes erstrecken und so die Feinheit und damit die Porenzahl des Filtergewebes negativ beeinflussen. Das weitere Fadensystem kann ein Bindeschuss oder eine Bindekette sein, welche sich zwischen den beiden Teilgeweben des Doppelgewebes erstreckt. Für eine besonders stabile Verbindung ist auch als weiteres Fadensystem ein Bindeschuss und eine Bindekette möglich. Die Größe des Fadens des weiteren Fadensystems kann insbesondere zwischen der Durchmessergröße der Fäden des Filtergewebes und der Fäden des Stützgewebes liegen. Vorzugsweise entspricht der Faden des weiteren Fadensystems in seiner Größe der Größe des Kettfadens oder des Schussfadens des Filtergewebes.

Eine besonders stabile und feine Ausgestaltung des Filtergewebes wird nach einer bevorzugten Ausführungsvariante der Erfindung dadurch erreicht, dass das Filtergewebe eine Köperbindung oder Satinbindung aufweist. Hinsichtlich des Stützgewebes ist es erfindungsgemäß bevorzugt, dass das Stützgewebe eine Köperbindung oder eine Leinwandbindung aufweist.

Eine besonders zweckmäßige Ausgestaltung wird weiterhin dadurch erreicht, dass das Stützgewebe ausschließlich aus Monofilgarnen gebildet ist und dass das Filtergewebe aus Multifilgarnen und/oder Monofilgarnen gebildet ist. Die Garne oder Fäden sind vorzugsweise aus einem Kunststoffmaterial, etwa Polyester, gefertigt. Die Ausgestaltung des Stützgewebes aus den drahtartigen Monofilgarnen hat den Vorteil, dass diese eine hohe Stabilität gewährleisten und auch bei einem lang andauernden Einsatz nicht ausfasern. Abhängig vom Einsatzzweck kann das Filtergewebe ebenfalls aus Monofilgarnen gebildet sein, wobei vorzugsweise eine Ausbildung zum Teil oder insgesamt aus Multifilgarnen vorteilhaft ist. Etwa beim Einsatz auf umlaufenden Bandfiltern kann der Garnaufbau mit einer Vielzahl von Fasern eine verbesserte Anpassbarkeit in den Umlenkbereichen durch die Verformung der Multifilgarne bewirken.

Entsprechend dem Einsatzzweck des Filtermediums ist es nach der Erfindung vorteilhafterweise vorgesehen, dass das weitere Fadensystem ein Multifilgarn oder ein Monofilgarn aufweist.

Eine weitere vorteilhafte Ausgestaltung der Erfindung besteht darin, dass das Filtermedium ein Gewicht von 300 g/m² und größer aufweist. Hiermit wird eine besonders stabile Ausgestaltung des Filtermediums erreicht. Nach der Erfindung beträgt die Maschenweite des Feingewebes 5 bis 100 µm, besonders bevorzugt 5 bis 150 µm. Damit ist zum einen eine ausreichend hohe mechanische Stabilität des Filtergewebes gewährleistet und zum anderen können auch Medien mit einem hinreichend kleinen Feststoffanteil filtriert werden. Weiter ist es zweckmäßig, wenn die Fadenzahl des Feingewebes in Schuss- und/oder Kettrichtung 10 bis 240, besonders vorteilhaft 40 bis 240 Fäden/cm beträgt. Vorzugsweise werden für das Filtergewebe Fadendurchmesser zwischen 20 bis 100 µm eingesetzt, welche herstellungstechnisch besonders einfach zu verarbeiten sind. Darüber hinaus können hinreichend kleine Maschenweiten von bis zu 5 µm erreicht werden. Weiter ist es bevorzugt, wenn die Gewebedicke des Feingewebes 40 bis 140 µm beträgt. Bei dieser Gewebedicke ist die notwendige mechanische Festigkeit des Feingewebes bei gleichzeitig möglichst geringem Druckverlust gewährleistet. Nach der Erfindung beträgt die Maschenweite des Stützgewebes zwischen 300 und 1.500 µm. Grundsätzlich kann das Filtermedium für eine Vielzahl unterschiedlicher Anwendungen beliebig konfektioniert sein. Nach der Erfindung ist das Filtermedium für einen Bandfilter vorgesehen, wobei die Enden des länglichen, bandförmigen Filtermediums zum Bilden eines Endlosbandes verbunden sind. Derartig umlaufend angetriebene Bandfilter sind aufgrund ihrer dynamischen Beanspruchung einer hohen Belastung ausgesetzt. Der robuste Aufbau des erfindungsgemäßen Filtermediums erlaubt den Einsatz auf Bandfilteranlagen, bei welchen Feinstpartikel abgetrennt werden müssen, etwa bei der Aufbereitung von Kühlflüssigkeit bei Schleifanlagen.

## Patentansprüche

1. Bandfilter mit einem länglichen Filtermedium, dessen Enden zum Bilden eines Endlosbandes verbunden sind, wobei
- das Filtermedium mit einem Filtergewebe an einer Oberseite und einem Stützgewebe an einer Unterseite ausgebildet ist,
dadurch **gekenzeichnet**,
- dass das Filtergewebe und das Stützgewebe unterschiedliche Garne aufweisen und zusammen als ein Doppelgewebe gewoben sind,
- dass das Filtergewebe und das Stützgewebe über ein weiteres Fadensystem als Bindeschuss und/oder Bindekette verbunden sind, dessen Größe der Durchmessergröße des Kettfadens oder des Schussfadens des Filtergewebes entspricht,
- dass das Stützgewebe eine Maschenweite zwischen 300 µm und 1500 µm aufweist,
- dass das Filtergewebe eine Maschenweite zwischen 5 bis 150 µm und eine Porenzahl von 5.000/cm² und größer aufweist und
- dass das Stützgewebe mindestens 70% der Dicke des als Doppelgewebe ausgebildeten Filtermediums beträgt.

2. Bandfilter nach Anspruch 1,
**dadurch gekennzeichnet,**
**dass** die Dichte der Kettfäden des Filtergewebes zumindest um den Faktor 4, vorzugsweise um den Faktor 10, höher als eine Dichte der Kettfäden des Stützgewebes ist.

3. Bandfilter nach Anspruch 1 oder 2,
**dadurch gekennzeichnet,**
**dass** ein Verhältnis des Durchmessers der Kettfäden des Stützgewebes zum Durchmesser der Kettfäden des Filtergewebes größer gleich 3,5 (≥3,5) ist.

4. Bandfilter nach einem der Ansprüche 1 bis 3,
**dadurch gekennzeichnet,**
**dass** ein Verhältnis des Durchmessers des Schussfadens des Stützgewebes zum Durchmesser des Schussfadens des Filtergewebes größer gleich 2,5 (≥2,5) ist.

5. Bandfilter nach einem der Ansprüche 1 bis 5,
**dadurch gekennzeichnet,**
**dass** die Fadenzahl des Filtergewebes 10 bis 240 Fäden/cm beträgt.

6. Bandfilter nach einem der Ansprüche 1 bis 5,
**dadurch gekennzeichnet,**
**dass** das Filtergewebe eine Köperbindung oder eine Satinbindung aufweist.

7. Bandfilter nach einem der Ansprüche 1 bis 6,
**dadurch gekennzeichnet,**
**dass** das Stützgewebe ausschließlich aus Monofilgarnen gebildet ist und dass das Filtergewebe aus Multifilgarnen und/oder Monofilgarnen gebildet ist.

8. Bandfilter nach Anspruch 6 oder 7,
**dadurch gekennzeichnet,**
**dass** das weitere Fadensystem ein Multifilgarn oder ein Monofilgarn aufweist.

9. bandfilter nach einem der Ansprüche 1 bis 8,
**dadurch gekennzeichnet,**
**dass** das Filtermedium ein Gewicht von 300 g pro m² und größer aufweist.

10. Bandfilter nach einem der Ansprüche 1 bis 9,
**dadurch gekennzeichnet,**
**dass** das Stützgewebe eine Köperbindung oder eine Leinwandbindung aufweist.

## Claims

1. Belt filter having an elongate filter medium, the ends of which are connected to form an endless belt, wherein
- the filter medium is designed with a filter fabric on an upper side and a supporting fabric on a lower side,
**characterized in that**
- the filter fabric and the supporting fabric have different yarns and are jointly woven as a double-weave fabric,
- the filter fabric and the supporting fabric are connected by way of a further thread system as binding weft and/or binding warp, the size of which corresponds to the diameter size of the warp thread or the weft thread of the filter fabric,
- the supporting fabric has a mesh width ranging between 300 µm and 1500 µm,
- the filter fabric has a mesh width ranging between 5 to 150 µm and a pore count of 5,000/cm² and greater and
- the supporting fabric amounts to at least 70% of the thickness of the filter medium designed as a double-weave fabric.

2. Belt filter according to claim 1,
**characterized in that**
the density of the warp threads of the filter fabric is higher at least by the factor of 4, preferably by the factor of 10, than a density of the warp threads of the supporting fabric.

3. Belt filter according to claim 1 or 2,
**characterized in that**
a ratio of the diameter of the warp threads of the supporting fabric to the diameter of the warp threads of the filter fabric is greater than or equal to 3.5 (≥ 3.5).

4. Belt filter according to any one of claims 1 to 3,
**characterized in that**
a ratio of the diameter of the weft thread of the supporting fabric to the diameter of the weft thread of the filter fabric is greater than or equal to 2.5 (≥ 2.5).

5. Belt filter according to any one of claims 1 to 5,
**characterized in that**
the thread count of the filter fabric amounts to 10 to 240 threads/cm.

6. Belt filter according to any one of claims 1 to 5,
**characterized in that**
the filter fabric has a twill weave or a satin weave.

7. Belt filter according to any one of claims 1 to 6,
**characterized in that**
the supporting fabric is exclusively formed of monofilament yarns and
**in that** the filter fabric is formed of multifilament yarns and/or monofilament yarns.

8. Belt filter according to claim 6 or 7,
**characterized in that**
the further thread system has a multifilament yarn or a monofilament yarn.

9. Belt filter according to any one of claims 1 to 8,
**characterized in that**
the filter medium has a weight of 300 g per m² and greater.

10. Belt filter according to any one of claims 1 to 9,
**characterized in that**
the supporting fabric has a twill weave or a plain weave.

## Revendications

1. Filtre à bande avec un milieu filtrant allongé, dont les extrémités sont reliées pour former une bande sans fin, dans lequel
- le milieu filtrant est réalisé avec un tissu de filtre au niveau d'un côté supérieur et avec un tissu de support au niveau d'un côté inférieur,
**caractérisé en ce**
- **que** le tissu de filtre et le tissu de support présentent des fils différents et sont tissés ensemble sous la forme d'un tissu doublé,
- **que** le tissu de filtre et le tissu de support sont reliés par l'intermédiaire d'un autre système de fils sous la forme d'une trame de liaison et/ou d'une chaîne de liaison, dont la taille correspond à la taille de diamètre du fil de chaîne ou du fil de trame du tissu de filtre,
- **que** le tissu de support présente une largeur de mailles comprise entre 300 µm et 1500 µm,
- **que** le tissu de filtre présente une largeur de mailles comprise entre 5 et 150 µm et un nombre de pores de 5000/cm² et plus, et
- **que** le tissu de support représente au moins 70 % de l'épaisseur du milieu filtrant réalisé sous la forme d'un tissu doublé.

2. Filtre à bande selon la revendication 1,
**caractérisé en ce**
**que** la densité des fils de chaîne du tissu de filtre est supérieure au moins d'un facteur de 4, de préférence du facteur de 10 à une densité des fils de chaîne du tissu de support.

3. Filtre à bande selon la revendication 1 ou 2,
**caractérisé en ce**
**qu'**un rapport entre le diamètre des fils de chaîne du tissu de support et le diamètre des fils de chaîne du tissu de filtre est supérieur ou égal à 3,5 (≥ 3,5).

4. Filtre à bande selon l'une quelconque des revendications 1 à 3,
**caractérisé en ce**
**qu'**un rapport entre le diamètre du fil de trame du tissu de support et le diamètre du fil de trame du tissu de filtre est supérieur ou égal à 2,5 (≥ 2,5).

5. Filtre à bande selon l'une quelconque des revendications 1 à 5,
**caractérisé en ce**
**que** le nombre de fils du tissu de filtre va de 10 à 240 fils/cm.

6. Filtre à bande selon l'une quelconque des revendications 1 à 5,
**caractérisé en ce**
**que** le tissu de filtre présente une armature sergée ou une armature satin.

7. Filtre à bande selon l'une quelconque des revendications 1 à 6,
**caractérisé en ce**
**que** le tissu de support est formé exclusivement à partir de fil monofilaments, et en ce que le tissu de filtre est formé à partir de fils multifilaments et/ou de fils monofilaments.

8. Filtre à bande selon la revendication 6 ou 7,
**caractérisé en ce**
**que** l'autre système de fils présente un fil multifilament ou un fil monofilament.

9. Filtre à bande selon l'une quelconque des revendications 1 à 8,
**caractérisé en ce**
**que** le milieu filtrant présente un poids de 300 g par m² et plus.

10. Filtre à bande selon l'une quelconque des revendications 1 à 9,
**caractérisé en ce**
**que** le tissu de support présente une armature sergée ou une armature toile.
